# EUROPEAN PATENT APPLICATION

(11) **EP 2 750 396 A2**
(43) Date of publication of application: **02.07.2014**
(21) Application number: 13184816.0
(22) Date of filing: 17.09.2013
(51) Int. Cl.: H04N 21/41, H04N 21/436, H04N 21/443

(54) **Media system and method of controlling the same**

(30) Priority: 27.12.2012 KR 20120154391
(71) Applicant: Humax Co., Ltd., Yongin-si 44-934 (KR)
(72) Inventor: Park, Sungheum, 446-579 Yongin-si (KR)
(74) Representative: Zardi, Marco

(57) **Abstract**

A media system and a method of controlling the media system are disclosed. The media server includes: a media unit configured to control a content sharing with a client; and an operation manager unit configured to switch an operation mode to a standby mode when a preset time passes after a content sharing of the client and the media server is stopped.

## Description

### CROSS-REFERENCE TO RELATED APPLICATIONS

This application claims the benefit of Korean Patent Application No. 10-2012-0154391, filed with the Korean Intellectual Property Office on December 27, 2012, the disclosure of which is incorporated herein by reference in its entirety.

### BACKGROUND

### 1. Technical Field

The present invention relates to a media system and a method of controlling the media system.

### 2. Description of the Related Art

A media system refers to a system capable of transmitting a content from one device to another so that the content may be shared. While there is active research under way on content synchronization, etc., in media systems, for example as disclosed in Korean Patent Publication No. 2012-0126527, there is little research on methods for reducing power consumption in a media system while improving user convenience.

### SUMMARY

An aspect of the invention is to provide a media system and a method of controlling the media system that can reduce power consumption and improve user convenience.

To achieve the objective above, an embodiment of the present invention provides a media server that includes: a media unit configured to control a content sharing with a client; and an operation manager unit configured to switch an operation mode to a standby mode when a preset time passes after a content sharing of the client and the media server is stopped.

An embodiment of the invention provides a first client connected with a media server and a second client. The first client includes: a communication unit configured to provide a connection path to the media server and the second client; and an operation manager unit configured to switch from an operation mode to a standby mode when a preset time passes after a content sharing from the first client to the second client is stopped.

An embodiment of the invention provides a method of controlling a media system. The method includes: transmitting a content to a client, by a content-transmitting terminal in an operation mode; and switching the content-transmitting terminal from the operation mode to a standby mode when a preset time passes after the transmitting of the content by the content-transmitting terminal is stopped.

With the media system and method of controlling the media system according to certain embodiments of the invention, the media server can be maintained at an operation mode until a preset amount of time passes after the point at which a content sharing is stopped, so that if the user requests the content again, the content can be provided again quickly. Thus, there is an improvement in user convenience.

Also, the media server can switch the operation mode to a standby mode when the preset amount of time has passed after the point at which the content sharing was stopped, thereby reducing the amount of power consumption by the media server.

Additional aspects and advantages of the present invention will be set forth in part in the description which follows, and in part will be obvious from the description, or may be learned by practice of the invention.

### BRIEF DESCRIPTION OF THE DRAWINGS

FIG. 1 is a diagram illustrating a media system according to a first embodiment of the invention.
FIG. 2 is a flowchart illustrating a method of controlling a media system according to a first embodiment of the invention.
FIG. 3A, FIG. 3B, and FIG. 3C are diagrams illustrating processes for playing a content in the operation mode and the standby mode according to an embodiment of the invention.
FIG. 4 is a flowchart illustrating a method of controlling a media system according to a second embodiment of the invention.
FIG. 5 is a flowchart illustrating a method of controlling a media system according to a third embodiment of the invention.
FIG. 6A and FIG. 6B are diagrams illustrating a method of setting modes according to an embodiment of the invention.
FIG. 7 is a diagram illustrating a method of controlling a media system according to a fourth embodiment of the invention.
FIG. 8 is a diagram illustrating a media system according to another embodiment of the invention.
FIG. 9 is a flowchart illustrating a method of controlling a media system according to a fifth embodiment of the invention.
FIG. 10 is a flowchart illustrating a method of controlling a media system according to a sixth embodiment of the invention.
FIG. 11 is a diagram illustrating a media system according to still another embodiment of the invention.
FIG. 12 is a block diagram schematically illustrating a media server according to an embodiment of the invention.
FIG. 13 is a block diagram illustrating a media system according to yet another embodiment of the invention.
FIG. 14 is a flowchart illustrating a method of controlling a media system according to a seventh embodiment of the invention.

### DETAILED DESCRIPTION

As the present invention allows for various changes and numerous embodiments, particular embodiments will be illustrated in the drawings and described in detail in the written description. However, this is not intended to limit the present invention to particular modes of practice, and it is to be appreciated that all changes, equivalents, and substitutes that do not depart from the spirit and technical scope of the present invention are encompassed in the present invention. In describing the drawings, like reference numerals are used for like elements.

The present invention relates to a controlling the operation of a media server, for example a home media server, when an occurrence of content sharing is stopped, in a media system such as an N-screen system. The invention proposes a method of efficiently controlling a media server, for example when the streaming of a particular content to a tablet PC is stopped, more particularly a method for improving user convenience while reducing power consumption. Here, a media server, particularly an N-screen server, may be a server that provides contents to another device (hereinafter referred to as a "client") for content sharing. A typical example of the media server may include a home media server that manages the operations of clients within the home, but the media server is not limited to a particular form as long as it is capable of implementing content sharing. Also, the content is not limited to a particular form and can be a TV program, a VOD program, a recording, a game program, a series of images, etc.

The media system and method of controlling the media system according to certain embodiments of the invention will be described below in more detail with reference to the accompanying drawings.

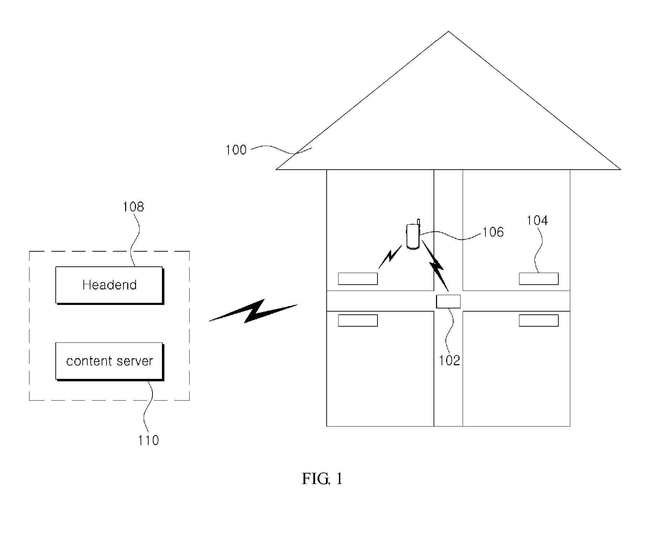

FIG. 1 is a diagram illustrating a media system according to a first embodiment of the invention.

Referring to FIG. 1, the media system of this embodiment can include a media server 102 located inside a home (e.g. an N-screen server used as a home media server), a first client 104, a second client 106, and a headend 108 and content server 100 located outside the home.

The media server 102 may be located inside the home, in the living room for example, to control the operation of at least one of the clients 104 and 106 present in the home. For example, the media server 102 can control a first client 104 to operate a TV connected with the first client 104 and can transmit a content to the second client 106 to share the content with the second client 106. According to an embodiment of the invention, the media server 102 can include an operation mode and a standby mode. Here, the operation mode refers to a mode in which the media server is active so that the media server can send and receive contents to and from the clients 104 and 106, while the standby mode refers to a mode in which the media server is in a standby state. In the standby mode, the media server 102 can turn off functions related to the TV or functions related to media services, particularly the N-screen service. This will be described later on in further detail.

If the media server 102 receives a request to retransmit a content while it is in the standby mode, particularly a deep standby mode, then the media server 102 may retransmit the content after rebooting. In this case, the media server 102 may be unable to continue transmitting the content from before entering the standby mode and may have to transmit the content again from the beginning.

While the descriptions above refer to the media server 102 transmitting contents to a client 104 or 106, it is also possible to have the media server 102 receive a content from a client 104 or 106 and share the content with a client 104 or 106. That is, the content sharing between the media server 102 and the client 104 or 106 can be realized by a transmission of the content from the media server 102 or by a transmission of the content from the client 104 or 106. Generally, the media server 102 may transmit the content to the client 104 or 106.

The first client 104 refers to a component to which a broadcast program, etc., is forwarded from the media server 102 for displaying on a TV, i.e. a component related to the TV, and can be located within a room 100 in a multi-room environment. Supposing that the media server 102 is a home media server, a settop, or a gateway, the first client 104 can be named a "sub-settop". In an embodiment of the invention, the first client 104 can be a low-cost component equipped only with basic functions such as forwarding a broadcast program from the media server 102 to a TV. The first client 104 does not necessarily have to be present inside the home, and in this case, the media server 102 can transmit contents directly to the TV.

The second client 106 can be a portable terminal or a mobile terminal such as a tablet PC, laptop, smart phone, etc., and can send and receive contents to and from the media server 102. For example, the second client 106 can be a smart phone, and the user inside the home can view a movie or play a game, etc., via the second client 106, which may receive contents from the media server 102 and display the contents. According to an embodiment of the invention, the second client 106 can be provided with a content from the media server 102 directly. According to another embodiment of the invention, the second client 106 can be provided with a content from the media server 102 through the first client 104. In this case, the first client 104 can simply serve to relay the content.

The headend 108, which may be the server of a broadcasting station, for example, may provide broadcast programs to the media server 102.

The content server 110 can provide contents other than broadcast programs to the media server 102. Here, the contents can include advertisements. Also, the content server 110 can generate contents.

Given such a media system, when the content sharing of the media server 102 and the client 104 or 106 is stopped, the media system based on an embodiment of the invention can have the mode of the media server 102 maintained at the operation mode or switched from the operation mode to the standby mode after a preset amount of time passes, e.g. after 30 minutes.

A more detailed description will be provided below of a method of controlling such media system, particularly the operations for controlling the media server, with reference to the accompanying drawings. For convenience, it will be assumed that the media server 102 controls the clients 104 or 106 directly. That is, it will be assumed that a content is provided directly from the media server 102 to the second client 106. Also, since the clients 104 or 106 are controlled by the media server 102 directly, the clients 104 and 106 will be collectively referred to as clients.

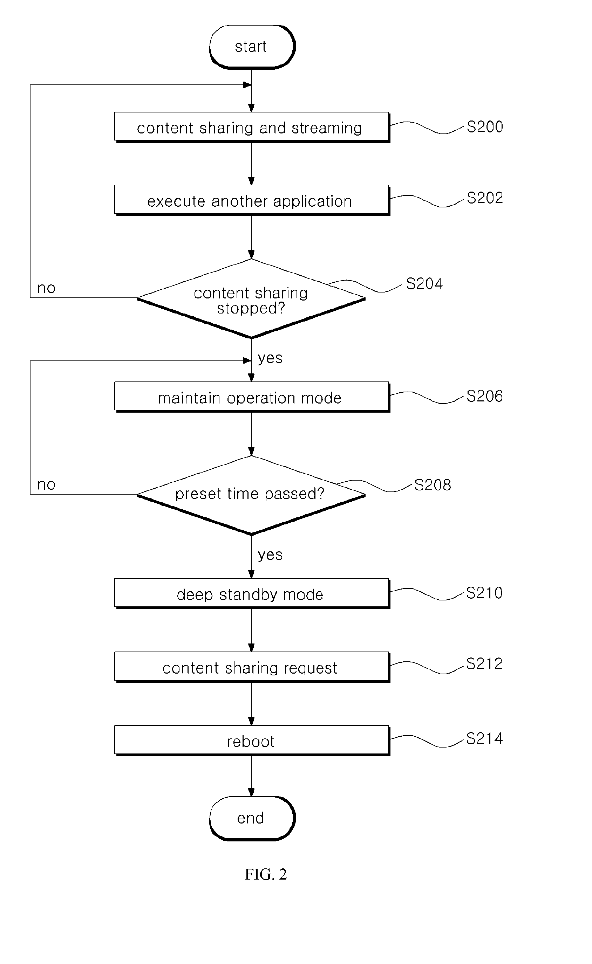

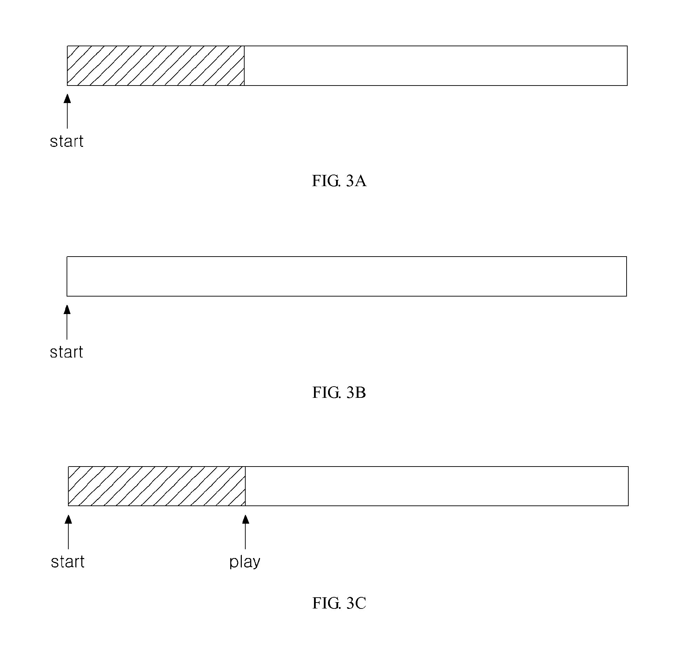

FIG. 2 is a flowchart illustrating a method of controlling a media system according to a first embodiment of the invention, and FIG. 3A, FIG. 3B, and FIG. 3C are diagrams illustrating processes for playing a content in the operation mode and the standby mode according to an embodiment of the invention.

Referring to FIG. 2, the media server and a client may share a content; for example, while in the operation mode, the media server can stream a content to the client such as by DLNA (S200). Here, the client can play a content by using a particular application, such as a media player, for example. The content is not limited to a particular type and can be a multimedia content, a VOD program, a recording, an advertising or promotional video, a TV control video, etc. Also, the media server can transmit a content after receiving a content request from a client, or the media server can transmit a content to the client without receiving a content transmission request from the client if a particular condition is met.

Next, the user can execute another application on the client (S202). For example, if the client is a smart phone, the client can run an Internet explorer, webtoon, music, text, navigation, stock market application, etc., that is unrelated to the transmitted content.

Continuing with the description, the client may determine whether or not the content sharing was stopped, i.e. whether or not the N-screen service was stopped (S204). For example, the client may determine whether or not the user ended the media player for playing the content. The user can execute a music application with the media player turned on, or execute a music application with the media player ended. In the former case, even though only the music application may be displayed on the client's screen, the media player is still operational, and therefore the content sharing was not stopped. In the latter case, the media player was turned off, and thus the content sharing was stopped.

If the client does not stop the content sharing, step S200 may be performed again, i.e. the media server may continue streaming the content to the client.

Conversely, if the client has stopped the content sharing, the media server may maintain the operation mode for a particular amount of time (S206). The operation mode in this step refers to a mode in which the media server does not transmit a content to a client but is able to transmit a content to a client immediately upon the client's request, i.e. a mode in which a connection is maintained between the media server and the client. Briefly put, the operation mode of this step may be similar to the operation mode during content streaming except that there is no content being transmitted, and all of the functions related to media services (the N-screen service) can be kept turned on. For example, a user may be using a client to watch a movie, and if the transmission of the content is stopped while the user was watching the movie at point A, then the media server can maintain the operation mode, so that if there is a request from the client to retransmit the content, the media server can transmit to the client the frames subsequently following point A.

Next, the client or the media server may determine whether or not a preset time has passed after the stopping of the content sharing (S208).

If the preset amount of time has not passed after the content sharing was stopped, then step S206 may be performed again.

Conversely, if the present amount of time, e.g. 30 minutes, passes after the stopping of the content sharing, then the media server may switch the operation mode to the standby mode, particularly the deep standby mode (S210). Here, the deep standby mode refers to a mode in which the media server only operates basic components such as the microcomputer, etc., and turns off all other components, resulting in the connection between the media server and the client being disconnected also. In the deep standby mode, the media server can be kept at a voltage of 0.5V or lower.

According to an embodiment of the invention, the client can check the preset time and transmit relevant information to the media server when the preset time passes, or the media server can check the preset time and switch the operation mode to the standby mode when the preset time passes.

Since there are generally many clients connected to the media server, the media server can switch the operation mode to the standby mode when the preset time has passed after the stopping point of the content sharing for the client that was disconnected last from among the multiple clients. That is, the media server may switch the operation mode to the standby mode when the connections of all clients have ended and the preset amount of time has passed after the point at which the last connection was ended. According to an embodiment of the invention, if the media server includes a separate component for controlling each client, then the components can be switched to the standby mode according to each client. For example, if the media server includes individual components for controlling four clients, the components of the media server that control a first client can be switched to the standby mode when the preset time has passed after the connection between the first client and the media server was ended, regardless of the connected states of the other clients and the media server.

Continuing with the description, if a client requests a content sharing again (S212), then the media server can switch from the standby mode to the operation mode and can retransmit the content to the client (S214). In this case, the media server can retransmit the content to the client after rebooting.

In short, the method of controlling a media system based on this embodiment can maintain the operation mode for a preset amount of time even when the content sharing is stopped, and can switch the operation mode to the standby mode after the preset time has passed.

If a client requests a content transmission while the media server is in the operation mode, the media server may transmit to the client the frames of the content from the point at which the playing of the content was stopped, as illustrated in FIG. 3A. As a result, the client can play the content, continuing from the point at which the play was stopped, as illustrated in FIG. 3C. This can be useful when the user uses another application for a short interval. To be more specific, if, for example, the user stops playing a content to take a call from a particular person, then it is likely that the user will request the content again before the preset time has passed. In this case, if the media server were switched to the standby mode, then when a content request is received again, the media server would have to reboot and transmit the content to the client from the beginning. Consequently, a considerable amount of time may be needed to play the content again at the client, and the user may have to play the content again from the beginning, as illustrated in FIG. 3B. However, an embodiment of the invention can keep the media server in the operation mode before the preset time is passed, so that when a content sharing request is received again from the client, the frames subsequently following the point at which the playing of the content was stopped can be transmitted to the client immediately, allowing the user to view the content quickly. In this way, the user's convenience in watching a content can be improved. Also, since the media system maintains the operation mode until the preset time is passed, it would not be necessary to reboot the media server if the user requests the content sharing again before the preset time has passed, and as such, the time needed for rebooting can be omitted when retransmitting the content.

On the other hand, if the client does not request a content sharing within the preset time, the media server may determine that the user does not intend to continue sharing the content, and may therefore switch the operation mode to the standby mode to reduce power consumption.

That is, the method of controlling a media system according to an embodiment of the invention may maintain the operation mode for a period of time, e.g. 30 minutes, during which there is a high possibility of the user requesting the content again, to improve the user's convenience and shorten the time needed for retransmitting the content, and when it is determined that the user would not request the content again, may switch from the operation mode to the standby mode to reduce power consumption. Thus, an embodiment of the invention can improve user convenience while reducing power consumption.

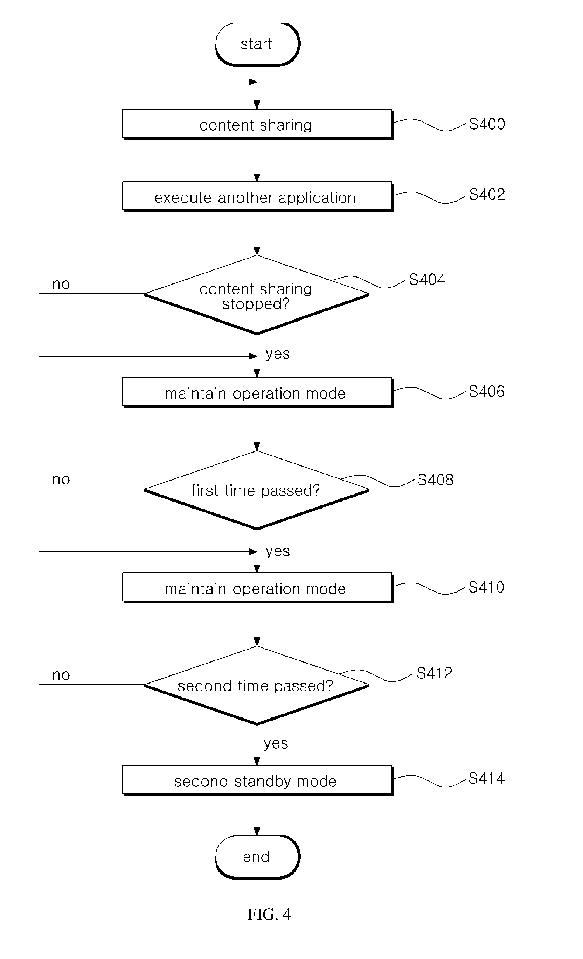

FIG. 4 is a flowchart illustrating a method of controlling a media system according to a second embodiment of the invention.

Referring to FIG. 4, the media server and a client may share a content, and for example, the media server may transmit a content to a client (S400).

If the client executes an application other than the application for running the transmitted content (S402), then the client may determine whether or not the content sharing was stopped (S404).

If the content sharing was not stopped, then step S400 may be performed again.

Conversely, if the content sharing was stopped, then the media server may maintain the operation mode which maintains operations other than the operation for transmitting a content (S404).

The media server or the client may determine whether or not a first time has passed since the stopping point at which the content sharing was stopped (S408).

If the first amount of time has not passed, then step S406 may be performed again.

Conversely, if the first time has passed, then the media server may switch from the operation mode to a first standby mode (S410). The first standby mode refers to a mode in which the media server turns off all functions related to the TV but maintains the functions related to the content transmission to the client, i.e. maintains functions related with media services (the N-screen service). Of course, in the first standby mode, there is no content transmitted from the media server to the client.

Next, the media server or the client may determine whether or not a second time has passed after the stopping point at which the content sharing was stopped (S412). Here, the second amount of time is greater than the first amount of time.

If the second amount of time has not passed, then step S410 may be performed again.

Conversely, if the second time has passed, then the media server may switch from the first standby mode to the second standby mode (S414). The second standby mode refers to a mode in which the media server not only turns off the TV-related functions but also turns off the functions related to the content transmission to the client, also turning off, in particular, the connection to the client. Thus, when switching from the second standby mode to the operation mode, the media server may reboot.

In short, the method of controlling a media system based on this embodiment may set a multiple number of standby modes for the media server and may switch standby modes in order according to the amount of time passed. More specifically, after the point at which the content sharing is stopped and before the second amount of time passes, the media server can maintain the functions related to content sharing for the convenience of the user and can turn off the functions related to the TV for the reduction of power consumption, but after the second amount of time passes, it may be determined that the user has no intention to share the content again, and in order to maximize the reduction of power consumption, the functions related to the content sharing as well as the functions related to the TV can be turned off.

According to another embodiment of the invention, step S406 in FIG. 4 can be omitted, and the first standby mode of step S410 can be triggered immediately when the content sharing is stopped. That is, when the content sharing is stopped, the media server can immediately turn off functions related to the TV and maintain functions related to the content sharing. However, in this case, the operations related to the TV should also have been stopped when the content sharing is stopped, and if the operations related to the TV are being performed, the media server should maintain the operation mode.

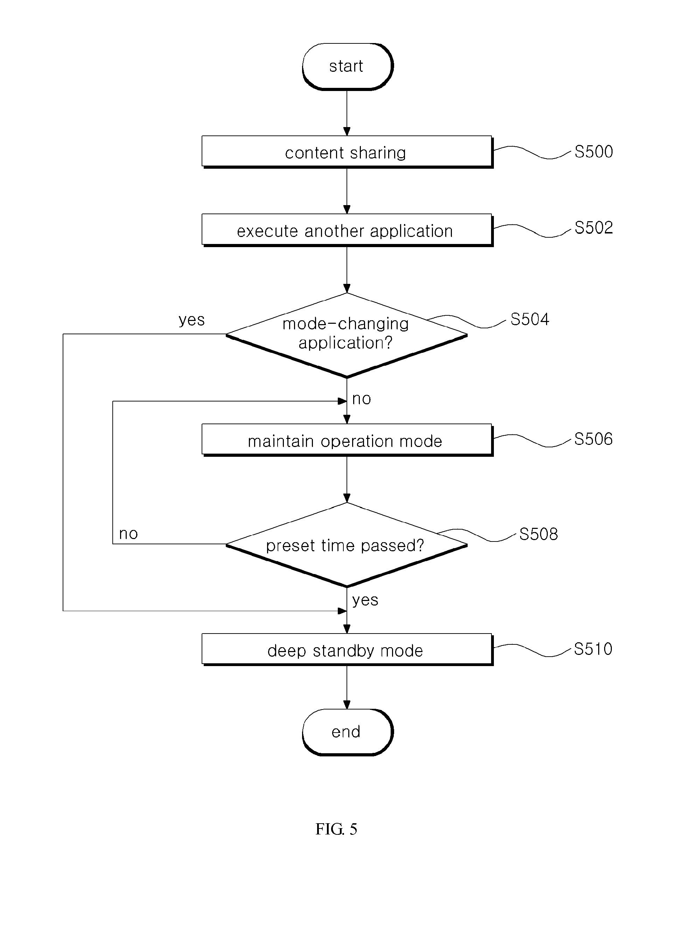

FIG. 5 is a flowchart illustrating a method of controlling a media system according to a third embodiment of the invention.

Referring to FIG. 5, the media server and the client may share a content, for example by way of the media server transmitting a content to the client (S500).

If the client executes an application other than an application that runs the transmitted content (S502), then the client or the media server may determine whether or not the other application is a mode-changing application (S504). Here, a mode-changing application refers to an application that is expected to be used by the user for a long period of time. For example, a navigation application when executed will likely be running for 30 minutes or more in general, and as such, a navigation application can be a mode-changing application, whereas a text application when executed will likely be ended within a few minutes and thus can be a regular application, not a mode-changing application. The applications installed on the client can be classified beforehand into mode-changing applications or regular applications. The results of the classification may be stored in at least one of the client and the media server.

If the other application is a mode-changing application, the media server may switch the operation mode to the standby mode (deep standby mode) (S510). This is to reduce power consumption, as it is determined that the user will not request content sharing again within the preset amount of time. In this case, the connection between the media server and the client may be ended.

Conversely, if the other application is not a mode-changing application, the media server may maintain the operation mode (S506), determine whether or not a preset time has passed after the stopping point at which the content sharing was stopped (S508), and when the preset time has passed, switch the operation mode to the standby mode (S510).

In short, a method of controlling a media system according to an embodiment of the invention may determine whether or not another application, which is executed with a stopping of the content sharing, is a mode-changing application; and if it is a mode-changing application, may switch the media server immediately to the standby mode; and if it is not a mode-changing application, may maintain the operation mode for a preset amount of time. That is, the method of controlling a media system according to an embodiment of the invention may maintain the operation mode or switch the operation mode to the standby mode in an intelligent manner. Thus, the media server based on this embodiment can improve the user's convenience while further reducing power consumption compared to that of the second embodiment.

According to another embodiment, if the other application is not a mode-changing application, the mode of the media server can be switched sequentially through a multiple number of standby modes.

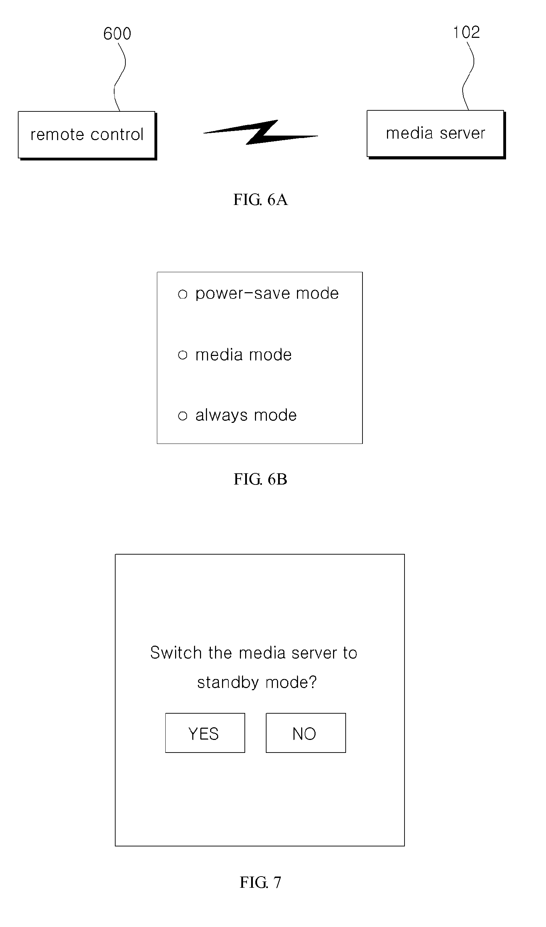

FIG. 6A and FIG. 6B are diagrams illustrating a method of setting modes according to an embodiment of the invention.

Referring to FIG. 6A, the user can control the media server 102, either directly or by using a remote control 600, to select one of the modes illustrated in FIG. 6B.

For example, if the user chooses the power-save mode, the media server can switch the operation mode to the standby mode (deep standby mode) and end the connection with the client to reduce power consumption when content sharing is stopped.

In another example, if the user chooses the media mode, the media server can operate according to one of the first to third embodiments described above. Of course, the media server can also operate according to any of the other embodiments described below.

In still another example, if the user chooses the always mode, the media server can maintain the operation mode regardless of the stopping of the content sharing, as long as the user does not turn the power off. In the always mode, the operation mode can be maintained for as long as the user does not change modes, or the operation mode can be maintained with a particular specified period (e.g. from 12 a.m. to 12 p.m.).

In yet another example, the user can choose an active standby-mode maintenance mode, in which case the media server can maintain an active standby mode regardless of the time passed, without entering the deep standby mode. Here, the active standby mode can correspond to the first standby mode, and the deep standby mode can correspond to the second standby mode of FIG. 4.

In short, a method of controlling a media system according to an embodiment of the invention can set various modes for the media server and can maintain the operation mode from the stopping point of the content sharing until the preset amount of time has passed, only when the user has selected the media mode.

FIG. 7 is a diagram illustrating a method of controlling a media system according to a fourth embodiment of the invention.

Referring to FIG. 7, if the client ends an application related to content sharing, i.e. if the content sharing is stopped, the screen of the client can display an image or a text reading "Switch the media server to standby mode?" or the like. In other words, unlike the other embodiments described above, the method of controlling a media system based on this embodiment can display a text, image, etc., or provide a voice output, querying whether or not to switch to the standby mode immediately when the content sharing is stopped, instead of waiting the preset amount of time. In this case, the media server can transmit a signal including such text, image, or voice output to the client, or the client can display the text or image or provide voice information by itself.

If the user indicates an intention not to enter the standby mode, then the media server can operate according to the method described in at least one of the first to third embodiments described above.

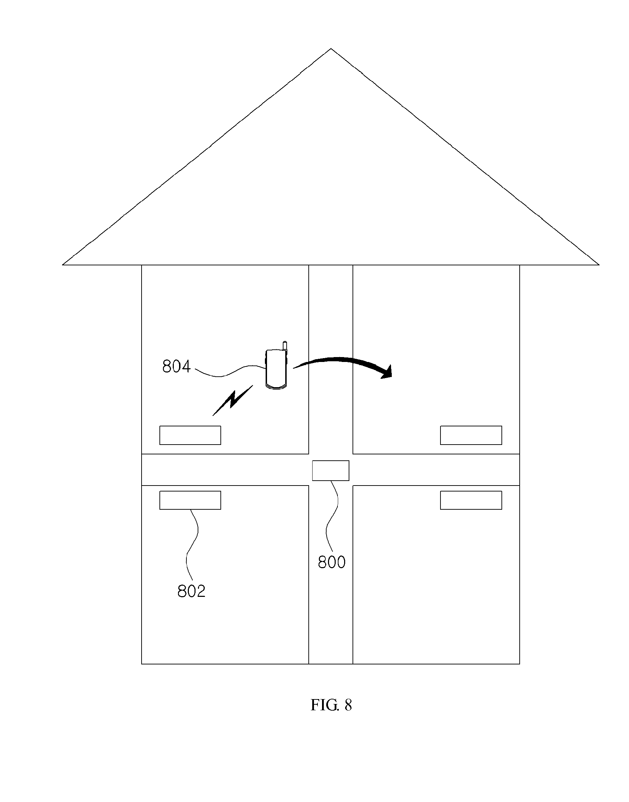

FIG. 8 is a diagram illustrating a media system according to another embodiment of the invention.

Referring to FIG. 8, a home can include therein a media server 800, a first client 802 located in each room as a sub-settop, and a second client 804 in the form of a smart phone, etc.

According to an embodiment of the invention, the second client 804 may not be provided with contents directly from the media server 800 but instead can be provided with a content from the media server 800 through a first client 802 or may be provided with the content from the first client 802. Preferably, the first client 802 can serve only for relaying the content.

Such a system can be useful in environments where radio wave reception between the rooms of a home is not adequate or environments where the communication range of Wi-Fi, etc., is limited and does not satisfy the needs of all of the spaces in the home, for example in the case of a considerably large home.

A description will now be provided of a method of controlling a media system in such an environment.

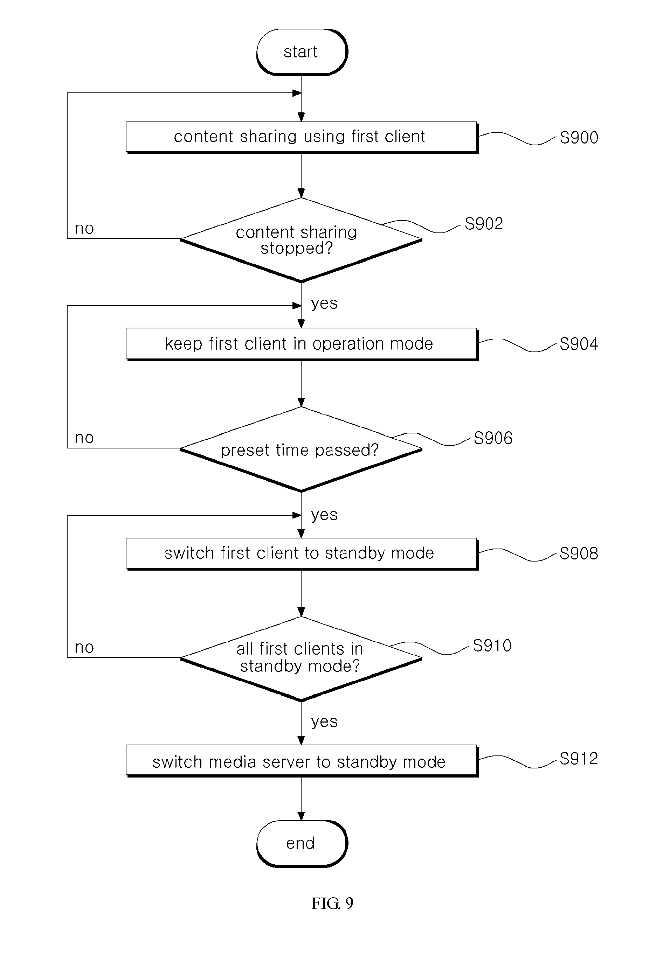

FIG. 9 is a flowchart illustrating a method of controlling a media system according to a fifth embodiment of the invention. FIG. 9 shows a method of controlling the media system of FIG. 8.

Referring to FIG. 9, a second client may share a content by receiving the content through a first client from the media server (S900). For example, the second client can be provided with a content via a first client in a particular room to be viewed by the user.

Next, the first client or the media server may determine whether or not the content sharing has been stopped (S902). For example, the first client or the media server may determine whether or not the second client has left the communication range of the first client. For instance, if the second client is moved to another room as illustrated in FIG. 8, then the second client would share a content by using a first client present in the other room, and in this case, the content sharing can be stopped for the first client present in the previous room.

If the content sharing of the second client has not been stopped, then step S900 may be performed again.

Conversely, if the content sharing of the second client has been stopped, then the first client may maintain the operation mode until a preset amount of time passes (S904).

Continuing on, it may be determined whether or not the preset time has passed after the point at which the content sharing was stopped (S906).

If the preset time has not passed, then step S904 may be performed again.

Conversely, if the preset time has passed, then the first client may switch the operation mode to the standby mode (S908). That is, the connection between the first client and the second client may be ended.

Next, the media server may determine whether or not all of the first clients are in the standby mode (S910).

If not all of the first clients are in standby mode, then the media server may maintain the operation mode.

Conversely, if all of the first clients are in standby mode, then the media server may also switch to the standby mode (S912). According to another embodiment of the invention, the media server can maintain the operation mode for a preset amount of time even if all of the first clients are in standby mode, and can switch the operation mode to the standby mode after the preset time has passed.

In short, the method of controlling a media system based on this embodiment can have a second client receive a content through a first client, such as a sub-settop, for example, keep the second client in operation mode before a preset amount of time has passed since the content sharing was stopped, and switch the second client from the operation mode to the standby mode when the preset time has passed.

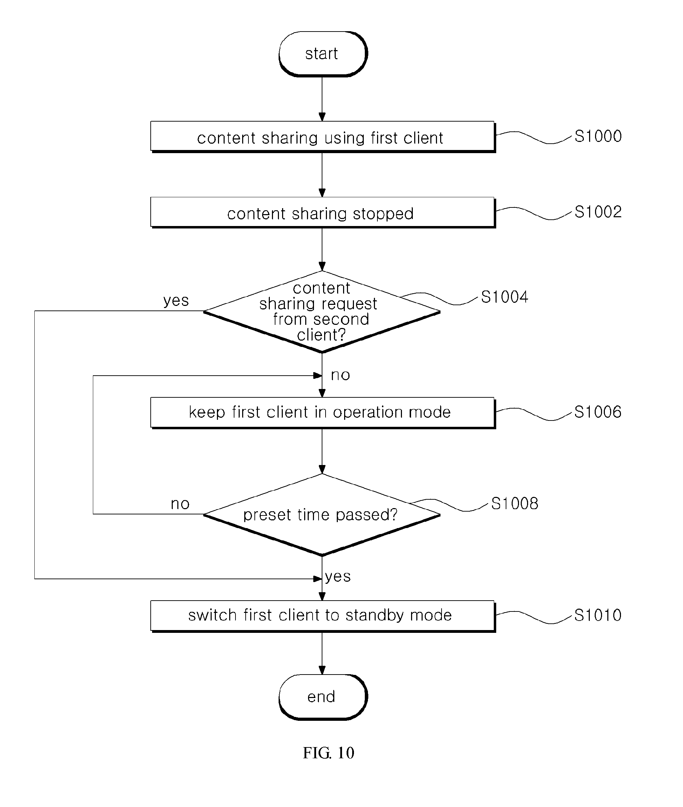

FIG. 10 is a flowchart illustrating a method of controlling a media system according to a sixth embodiment of the invention. FIG. 10 shows a method of controlling the media system of FIG. 8.

Referring to FIG. 10, the second client may share a content by receiving the content through a first client from the media server (S1000).

Next, when the content sharing of the second client is stopped, for example when the second client is moved to another room (S1002), the media server may determine whether or not the second client sends a content sharing request before a preset amount of time passes (S1004). For example, if the user moves to another room while carrying the second client, then the second client can request the media server for a content sharing through the first client of the corresponding room.

If the second client requests a content sharing, i.e. if the second client sends a request for the content to the media server through the first client of a different room, then the first client in the previous room may be switched from the operation mode to the standby mode (deep standby mode) (S1010). This is because there is no longer a need to operate the first client of the previous room, as the second client is sharing the content by using the first client of the room to which it was moved.

Conversely, if the second client does not request content sharing, then the second client can be connected again, and as such, the first client of the previous room may be kept in the operation mode (S1006).

Continuing on, the first client or the media server may determine whether or not the preset time has passed after the stopping point of the content sharing (S1008).

If the preset time has not passed, then step S1006 may be performed again.

Conversely, if the preset time has passed, then the first client of the previous room may switch the operation mode to the standby mode (S1010).

In short, the media system based on this embodiment can control the standby mode setting of the first client in consideration of the movement of the second client in a multi-room environment.

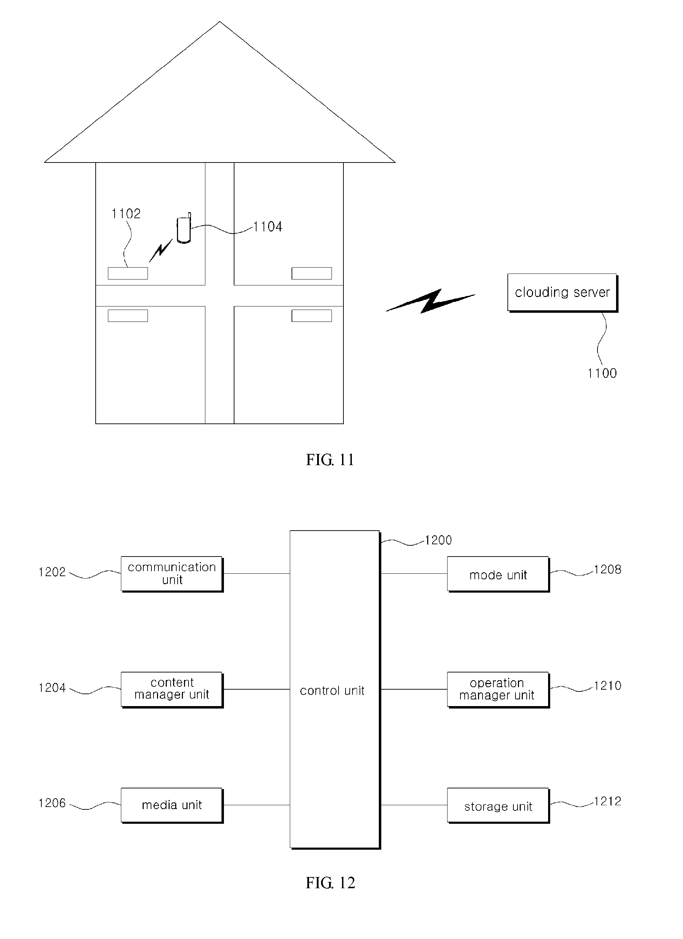

FIG. 11 is a diagram illustrating a media system according to still another embodiment of the invention.

Referring to FIG. 11, the media server may not be present inside the home and can be present outside the home. In this case, the media server can be a clouding server 1100. Inside the home, there can be at least one first client 1102 and one or more second client 1104.

According to an embodiment of the invention, the first client 1102 can be provided with information, screen images, etc., from the clouding server 1100 for booting.

The second client 1104 can be provided with a content from the clouding server 1100 through a first client 1102, or can be provided with the content directly from the first client 1102.

Similar to the fifth embodiment and sixth embodiment, the first client 1102 can maintain the operation mode after the content sharing is stopped until a preset time is passed, and can switch the operation mode to the standby mode after the preset time is passed. The operations of the first client 1102 are similar to those in the fifth and sixth embodiments and thus will not be described here in further detail.

In short, the media system based on this embodiment can keep the first client in the operation mode or switch modes to the standby mode in consideration of the preset time, even when the media server 1100 is present outside the home.

Referring to FIG. 1 through FIG. 11, the media server or the first client can serve to transmit contents, and as such, the media server or a first client transmitting a content can also be referred to as a content-transmitting terminal. That is, the mode of the content-transmitting terminal can be different depending on whether or not a preset amount of time has passed after the stopping point at which the content sharing between a content-transmitting terminal and a client was stopped.

FIG. 12 is a block diagram schematically illustrating a media server according to an embodiment of the invention.

Referring to FIG. 12, a media server based on this embodiment can include a control unit 1200, a communication unit 1202, a content manager unit 1204, a media unit 1206, a mode unit 1208, an operation manager unit 1210, and a storage unit 1212.

The communication unit 1202 may serve as a connection path to the first client and second client as well as a connection path to an external device.

The content manager unit 1204 may manage the content that is to be shared with the second client.

The media unit 1206 may control all operations related to media services, particularly the N-screen service, and may serve, for example, to provide a content to the second client.

The mode unit 1208 may control the overall operations related to setting modes.

The operation manager unit 1210 may set the mode of the media server in a manner suitable to the circumstances and may control the operations according to the set mode.

According to an embodiment of the invention, the operation manager unit 1210 may maintain the operation mode until a preset time passes since the content sharing of the client and the media server is stopped, and when the preset time has passed, may switch the operation mode to the standby mode.

According to an embodiment of the invention, the operation manager unit 1210 may maintain the operation mode until a first amount of time passes since the content sharing is stopped, and after the first time has passed, may switch the operation mode to a first standby mode until a second amount of time passes, and after the second time has passed, may switch the first standby mode to a second standby mode. In this case, the second amount of time may be greater than the first amount of time; in the first standby mode, the media server may turn off functions related to the TV connection while maintaining functions related to the content sharing; and in the second standby mode, the functions related to the content sharing may be turned off as well.

According to an embodiment of the invention, the operation manager unit 1210 may maintain the operation mode or switch the operation mode to the standby mode according to the preset time, if the application related to the content sharing is ended on the client and another application is executed.

According to an embodiment of the invention, the operation manager unit 1210 may switch the operation mode to the standby mode after the preset amount of time passes if the application executed on the client other than the application related to the content sharing is not a mode-changing application, but if it is a mode-changing application, may switch the operation mode to the standby mode immediately when the content sharing is stopped. Here, the mode-changing application may be an application of which the running time by the user is predicted to be longer than the preset time.

According to an embodiment of the invention, the media server can be a server that controls the operations of the clients in a multi-room environment, and the operation manager unit 1210 can switch the operation mode of the media server to the standby mode after the preset time has passed since the content transmission stopping point of the client for which the content transmission was stopped the latest from among multiple clients.

The storage unit 1212 may store various data such as contents, programs, etc.

The control unit 1200 may control the overall operations of the elements of the media server.

The components of the media server above can also be included in a first client.

According to an embodiment of the invention, the operation manager unit of the first client may maintain the operation mode until the preset time passes after the content transmission from the first client to the second client is stopped, and may switch the operation mode to the standby mode after the preset amount of time passes since the content transmission is stopped.

According to an embodiment of the invention, the operation manager unit may maintain the operation mode until the preset time passes after the content transmission from the first client to the second client is stopped, and may switch the operation mode to the standby mode after the preset amount of time passes since the content transmission is stopped.

According to an embodiment of the invention, the first client may be a component for transmitting broadcast programs to a TV, and the second client may be one of a smart phone, a tablet PC, and a laptop. If an application related to the content is ended and another application is executed on the second client, the operation manager unit of the first client may maintain the operation mode or switch the operation mode to the standby mode according to the preset time.

According to an embodiment of the invention, the media server, the first clients, and the second client may be located inside a home, and the first clients may be present in separate rooms. If the second client is moved to another room, the operation manager unit of the first client can maintain the operation mode until the preset amount of time passes, and after the preset time passes, can switch the operation mode to the standby mode.

According to an embodiment of the invention, if the second client is moved to another room and afterwards is provided with the content through the first client of the other room, then the operation manager unit can switch the first client from the operation mode to the standby mode even if the preset time has not passed.

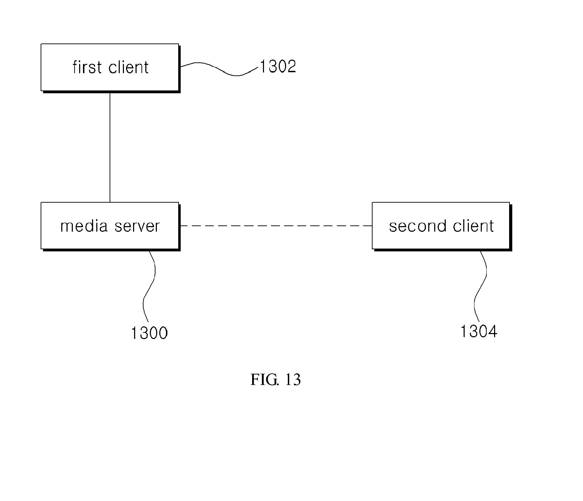

FIG. 13 is a block diagram illustrating a media system according to yet another embodiment of the invention.

Referring to FIG. 13, a media system based on this embodiment can include a media server 1300, a first client 1302, and a second client 1304.

Here, a first client 1302 refers to a device registered in the media server 1300, and a second client 1304 refers to a device that is currently not registered in the media server 1300. For example, the second client 1304 can be a smart phone belonging to a user that has visited a friend's house.

In this environment, the second client 1304 can be registered into the media server 1300 or can be connected temporarily to enable a transmission and reception of contents.

That is, even devices that are not currently registered in the media server 1300 can be registered or temporarily connected by communicating with the media server 1300.

A description will now be provided of the procedure by which a second client 1304 may connect to the media server 1300 and of the operations of the media system.

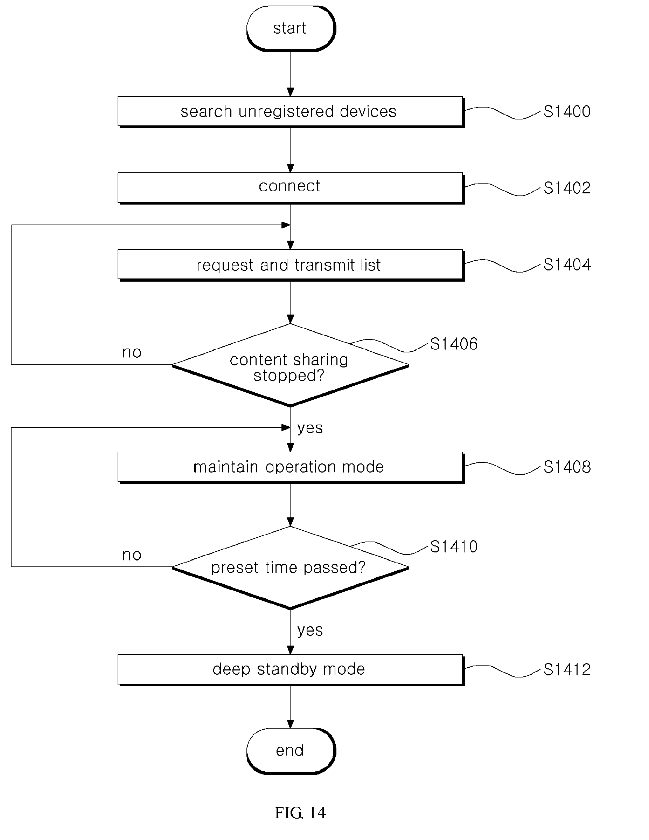

FIG. 14 is a flowchart illustrating a method of controlling a media system according to a seventh embodiment of the invention.

Referring to FIG. 14, the media server 1300 may search for unregistered devices (S1400). According to an embodiment of the invention, the media server 1300 can continuously or periodically broadcast signals for searching unregistered devices. The signals can be for searching devices that wish to receive or provide a particular content from or to the media server 1300.

For example, the second client 1304 can send a reply signal, e.g. an ACK, in response to the signal broadcasted from the media server 1300, and the media server 1300 can register the second client 1304 in response to the reply signal thus transmitted, and as a result, the second client 1304 and the media server 1300 can be connected (S1402). Here, it may be preferable to have the second client 1304 connected to the media server 1300 after completing a certification process. The certification is not limited to a particular method and can differ in various ways, and previous certification methods can be adopted freely.

Continuing on, the second client 1304 can request for a content list from the media server 1300, the media server 1300 can transmit a content list to the second client 1304, and the media server 1300 can provide a corresponding content according to the content selection of the second client 1304 to share the content with the second client 1304 (S1404). Here, the content list can be a list including content items that are carried by the media server 1300 or content items that can be provided to the connected clients. According to another embodiment of the invention, the media server 1300 can request a content list from the second client 1304, with the list including contents carried by the second client 1304, to be provided with the contents.

Next, the media server 1300 may determine whether or not the sharing of the content has been stopped (S1406).

If the sharing of the content was not stopped, then step S1404 may be performed again.

Conversely, if the sharing of the content was stopped, the media server 1300 can maintain the operation mode until a preset amount of time passes (S1408).

Continuing on, the media server 1300 can determine whether or not the preset time has passed (S1410), and if the preset time has passed, can switch the operation mode to the deep standby mode (S1412).

In short, the media system based on this embodiment can connect with not only the currently registered clients but also unregistered clients, and can provide contents to newly registered clients for sharing. In this case also, the media server 1300 can maintain the operation mode before a preset amount of time passes, and when the preset amount of time passes, can switch the operation mode to the standby mode.

The method illustrated in FIG. 14 is merely one example, and any of the methods of controlling a media system described above with reference to FIGs. 1 to 11 can be applied to the media system incorporating newly registered clients.

Although the descriptions above refer to the media server 1300 searching for devices that may be newly registered, it is also possible to have the unregistered device search for the media server 1300 and request registration to the media server 1300.

The embodiments of the invention described above are disclosed for illustrative purposes. Those of ordinary skill in the field of art to which the present invention pertains would understand that various modifications, alterations, and additions can be made without departing from the spirit and scope of the invention, and that such modifications, alterations, and additions are encompassed by the scope of claims below.

## Claims

1. A media server comprising:
a media unit configured to control a content sharing with a client; and
an operation manager unit configured to switch an operation mode to a standby mode when a preset time passes after a content sharing of the client and the media server is stopped.

2. The media server of claim 1, wherein the operation manager unit maintains the operation mode until a first time passes after the content sharing is stopped, switches the operation mode to a first standby mode until a second time passes after the first time passes, and switches the first standby mode to a second standby mode when the second time passes,
and wherein the second time is greater than the first time, the media server in the first standby mode turns off functions related to a TV connection but maintains functions related to the content sharing, and the media server in the second standby mode also turns off the functions related to the content sharing.

3. The media server of claim 1, wherein the operation manager unit maintains the operation mode until the preset time passes after the content sharing is stopped, the client is one of a smart phone, a tablet PC, and a laptop, and the operation manager unit maintains the operation mode or switches the operation mode to the standby mode according to the preset time when an application related to the content sharing is ended and another application is executed at the client.

4. The media server of claim 1, wherein the operation manager unit switches the operation mode to the standby mode when the preset time has passed if an application running on the client excluding applications related to the content sharing is not a mode-changing application, and switches the operation mode to the standby mode immediately upon the content sharing being stopped if the application running on the client is a mode-changing application,
and wherein the mode-changing application is an application of which a time of running by a user is predicted to be longer than the preset time.

5. The media server of claim 1, further comprising:
a mode unit configured to set a media mode and a power-save mode,
wherein the media mode is a mode for maintaining an operation mode until the preset time after the content sharing is stopped, and the power-save mode is a mode for switching the operation mode to the standby mode immediately when the content sharing is stopped,
and wherein the modes are selectable by a user.

6. The media server of claim 1, wherein the operation manager unit, upon receiving a request for content sharing again before the preset time has passed, transmits to the client frames of the content that were not previously transmitted.

7. The media server of claim 1, wherein the media server is a server configured to control operations of the clients in a multi-room environment,
and the media server switches the operation mode to the standby mode when the preset time passes after a transmission stopping point of a client for which a content transmission was stopped latest from among the clients.

8. A first client connected with a media server and a second client, the first client comprising:
a communication unit configured to provide a connection path to the media server and the second client; and
an operation manager unit configured to switch an operation mode to a standby mode when a preset time passes after a content sharing from the first client to the second client is stopped.

9. The first client of claim 8, wherein the operation manager unit maintains the operation mode until the preset time passes, the first client is a component configured to transmit a broadcast program to a TV, the second client is one of a smart phone, a tablet PC, and a laptop, and the media server is an N-screen server,
and wherein the operation manager unit maintains the operation mode or switches the operation mode to the standby mode according to the preset time when an application related to the content is ended and another application is executed at the second client.

10. A method of controlling a media system, the method comprising:
transmitting a content to a client, by a content-transmitting terminal in an operation mode; and
switching the content-transmitting terminal from the operation mode to a standby mode when a preset time passes after the transmitting of the content by the content-transmitting terminal is stopped.

11. The method of claim 10, wherein the switching to the standby mode comprises:
maintaining the operation mode until a first time passes after the transmitting of the content is stopped, by the content-transmitting terminal;
switching the operation mode to a first standby mode until a second time passes after the first time passes, by the content-transmitting terminal; and
switching the first standby mode to a second standby mode when the second time passes, by the content-transmitting terminal,
wherein the second time is greater than the first time, a media server in the first standby mode turns off functions related to a TV connection but maintains functions related to the content transmission, and the media server in the second standby mode also turns off the functions related to the content transmission.

12. The method of claim 10, further comprising:
maintaining the operation mode until the preset time passes after the transmitting of the content sharing is stopped,
wherein the content-transmitting terminal is an N-screen server present inside a home or an N-screen server present outside the home.

13. The method of claim 10, wherein the content-transmitting terminal is a server configured to control operations of clients in a multi-room environment,
and the content-transmitting terminal is switched from the operation mode to the standby mode when the preset time passes after a transmission stopping point of a client for which a content transmission was stopped latest from among the clients.

14. The method of claim 10, wherein the content-transmitting terminal is a sub-settop present in a particular room and is configured to forward a content transmitted from a media server to the client, and if the client is moved to another room, the content-transmitting terminal maintains the operation mode until the preset time passes after the transmitting of the content is stopped.

15. The method of claim 10, wherein the content-transmitting terminal is a sub-settop present in a particular room, and if the client is moved to another room, the content-transmitting terminal switches the operation mode to the standby mode even before the preset time has passed.
